# EUROPEAN PATENT APPLICATION

(11) **EP 4 825 790 A1**
(43) Date of publication of application: **21.10.2026**
(21) Application number: 24904067.6
(22) Date of filing: 26.11.2024
(51) Int. Cl.: C01B 3/04, C21B 13/00, C22B 5/12, B01J 8/00, B01J 8/18, B01J 19/00

(54) **AMMONIA DECOMPOSITION SYSTEM**

(30) Priority: 15.12.2023 KR 20230183848
(71) Applicant: POSCO Holdings Inc., Pohang-si, Gyeongsangbuk-do 37859 (KR)
(72) Inventor: PARK, Hai-Woong, Pohang-si, Gyeongsangbuk-do 37877 (KR); RHEE, Chang-Houn, Pohang-si, Gyeongsangbuk-do 37877 (KR); JOO, Sang-Wook, Pohang-si, Gyeongsangbuk-do 37877 (KR); KIM, Beom-Sik, Pohang-si, Gyeongsangbuk-do 37877 (KR); KWON, Gi-Hun, Pohang-si, Gyeongsangbuk-do 37877 (KR)
(74) Representative: Pfenning, Meinig & Partner mbB
(86) International application number: PCT/KR2024/018819
(87) International publication number: WO 2025/127502

(57) **Abstract**

Provided according to exemplary embodiments of the present invention is an ammonia decomposition system capable of minimizing the generation of iron nitride, which is a byproduct.

## Description

### Technical Field

The present disclosure relates to an ammonia decomposition system.

### Background Art

Previously, a method of compressing or liquefying hydrogen at high pressure was applied as a technology for storing and transporting hydrogen, but recently, a technology for storing and transporting hydrogen using ammonia has been reviewed and applied, and this technology, using ammonia, is drawing attention due to being more efficient than conventional high pressure or liquefaction technologies.

In order to use the hydrogen stored in ammonia after transport thereof, a process of decomposing the ammonia into hydrogen again is required. In order to decompose ammonia to produce hydrogen, the following Reaction Scheme may be performed:

[Reaction Scheme 1] 2NH₃ → N₂ + 3H₂ (ΔH=46 kJ/mol)

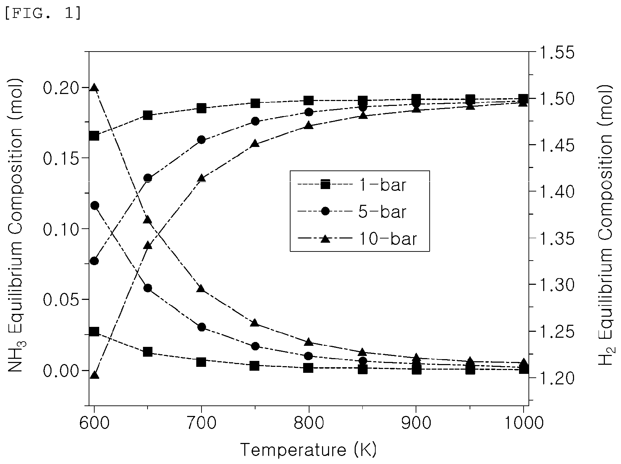

FIG. 1 is a graph illustrating thermodynamic equilibrium concentrations of ammonia and hydrogen, depending on a temperature and a pressure. As illustrated in FIG. 1, an ammonia decomposition reaction, as described above, may be an endothermic reaction, and is characterized in that, as temperature increases, an equilibrium conversion rate may increase, but since the number of moles of reactants is greater than the number of moles of products, as a pressure increases, the equilibrium conversion rate may decrease.

In order to use hydrogen transferred in a form of ammonia, an ammonia decomposition process of decomposing the ammonia transferred from the place of use should be undertaken. In this case, a catalyst, and thermal energy for ammonia decomposition, are required.

Therefore, in order to reduce energy consumption in a decomposition reaction of ammonia, it may be necessary to apply a catalyst operating efficiently even at low temperatures.

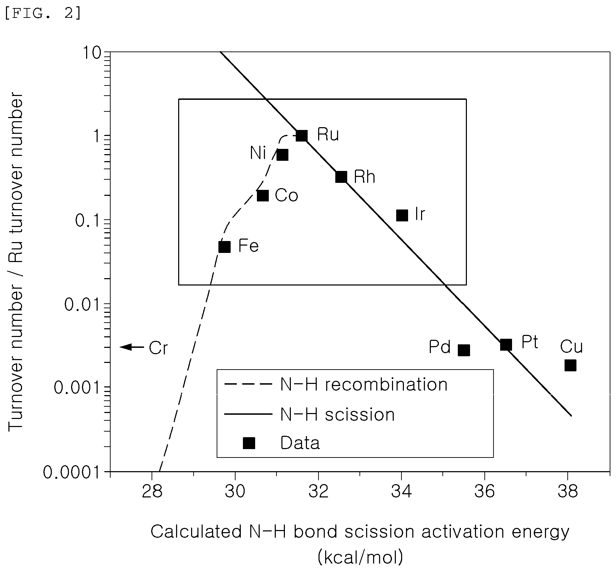

As a conventional ammonia decomposition catalyst, a metal catalyst dispersed in a metal oxide support has been studied extensively. FIG. 2 is a graph illustrating an ammonia decomposition catalyst activity (turnover number). As may be seen from FIG. 2, an Ru catalyst is known as the most efficient catalyst, and Ni, Co, Fe, or the like may be used as a non-precious metal catalyst.

Recently, the steel industry has been developing a hydrogen reduction process for converting an iron ore reducing agent from carbon to hydrogen. In the hydrogen reduction process, a high-temperature reaction may be required to reduce iron ore, and reduced iron produced thereby may have high thermal energy. When such reduced iron is used as a catalyst for an ammonia decomposition reaction, energy required for ammonia decomposition may be efficiently supplied, and efficiency of the ammonia decomposition process may be improved. However, when the reduced iron is used as a catalyst for the ammonia decomposition reaction, there may be a problem that a surface of the reduced iron may be nitrided to form iron nitride having a FeₓN_{y} structure. Therefore, it is necessary to develop a technology to solve the above-described problems.

(Patent Document 1) Japan Patent Publication No. 2023-5395111.

### Disclosure of Invention

### Technical Problem

The problem to be solved by the technical idea of the present disclosure is to provide an ammonia decomposition system using reduced iron as a catalyst.

The object of the present disclosure is not limited to the above description. Those of ordinary skill in the art to which the present disclosure pertains will have no difficulty in understanding the additional object of the present disclosure from the overall contents of the present specification.

### Solution to Problem

According to example embodiments of the present disclosure, an ammonia decomposition system is provided. The ammonia decomposition system includes a fluidized bed reactor configured to receive ammonia and reduced iron, discharge the reduced iron through a lower portion of the fluidized bed reactor, form a catalyst fluidized bed, and contact the ammonia with the catalyst fluidized bed to generate hydrogen from the ammonia, wherein a ratio (D/Q) of a supply flow rate (Q) of the ammonia to the fluidized bed reactor and a supply amount (D) of the reduced iron is in a range of 40 to 300 kg/Nm³.

The ratio (D/Q) of a supply flow rate (Q) of the ammonia to the fluidized bed reactor and a supply amount (D) of the reduced iron may be controlled to be in a range of 70 to 200 kg/Nm³.

The ammonia decomposition system may further include a flow reduction furnace configured to be connected to the fluidized bed reactor to provide the reduced iron to the fluidized bed reactor, and wherein the flow reduction furnace may be configured to generate reduced iron by inputting and transferring powdered iron ore, and reducing the powdered iron ore with a reducing gas supplying in countercurrent flow with regard to a transfer direction of the powdered iron ore.

A supply temperature of the reduced iron may be 600°C or higher.

A discharge temperature of the reduced iron may be 500°C or higher.

An average temperature of the hydrogen flowing in an upper portion of the fluidized bed reactor may be 600°C or higher.

An amount of iron nitride (FeₓN_{y}) contained in the discharged reduced iron may be less than 3% (including 0%) by weight.

An amount of iron nitride (FeₓN_{y}) contained in the discharged reduced iron may be 1% or less (including 0%) by weight.

The ammonia may be provided at a space velocity of 2,500 h⁻¹ to 10,000 h⁻¹.

### Advantageous Effects of Invention

According to example embodiments of the present disclosure, it is possible to provide an ammonia decomposition system capable of minimizing generation of iron nitride by controlling an ammonia supply flow rate and a supply amount of reduced iron.

Various advantages and effects of the present disclosure are not limited to the above description, and may be more easily understood in the process of explaining the specific embodiment of the present disclosure.

### Brief Description of Drawings

FIG. 1 is a graph illustrating thermodynamic equilibrium concentrations of ammonia and hydrogen, depending on a temperature and a pressure.
FIG. 2 is a graph illustrating an ammonia decomposition catalyst activity (turnover number).
FIG. 3 is a view illustrating an ammonia decomposition system according to example embodiments.
FIG. 4 is a graph comparing and evaluating ammonia decomposition performance for each catalyst.
FIG. 5 is a view illustrating an ammonia decomposition system according to other example embodiments.

### Best Mode for the Invention

Hereinafter, preferred embodiments of the present disclosure will be described in detail with reference to the attached drawings. Prior thereto, it should be noted that terms and words used in the present specification and claims should not be construed as limited to conventional or dictionary meanings thereof. Based on the principle that inventors may appropriately define the concepts of terms to best explain the inventions, they should be construed as meanings and concepts consistent with the technical spirit of the present disclosure.

Hereinafter, when describing with reference to the drawings, identical or corresponding components may be assigned the same reference numerals, and redundant descriptions thereof will be omitted.

In the following examples, terms such as first, second, or the like may not be used in a limiting sense, but rather to distinguish one component from another.

In the following examples, a singular expression may include a plural expression, unless the context clearly indicates otherwise.

In the following examples, terms such as including, having, or the like, may indicate the presence of a feature or component described in the specification, but do not preclude possibility of adding one or more other features or components.

For convenience of explanation, components in the drawings may be exaggerated or reduced in size. For example, a size and a thickness of each of the components illustrated in the drawings may be arbitrarily indicated for convenience of explanation, and the present disclosure is not necessarily limited to the illustrated embodiments.

When a particular embodiment is implemented differently, a specific process order may be performed differently from an order described. For example, two processes described in succession may be performed substantially simultaneously or in a reverse order of the described order.

Furthermore, when describing the present disclosure, detailed descriptions of known components or functions may be omitted if they may be deemed to obscure the gist of the present disclosure.

In addition, unless otherwise defined, an amount of an alloy composition to be described later means weight%.

### [Ammonia Decomposition System]

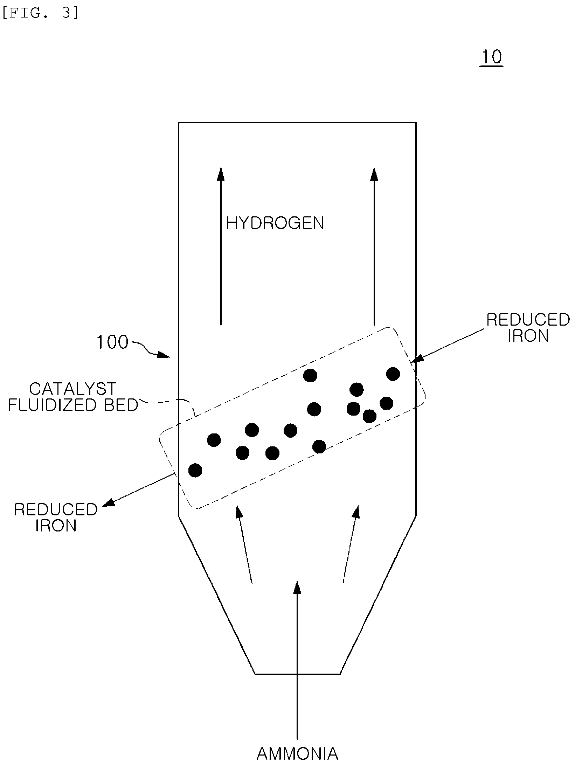

FIG. 3 is a view illustrating an ammonia decomposition system 10 according to example embodiments.

Referring to FIG. 3, an ammonia decomposition system 10 according to example embodiments may include a fluidized bed reactor 100.

The fluidized bed reactor 100 may receive ammonia and reduced iron. According to example embodiments, the reduced iron may be used as a catalyst for an ammonia decomposition reaction.

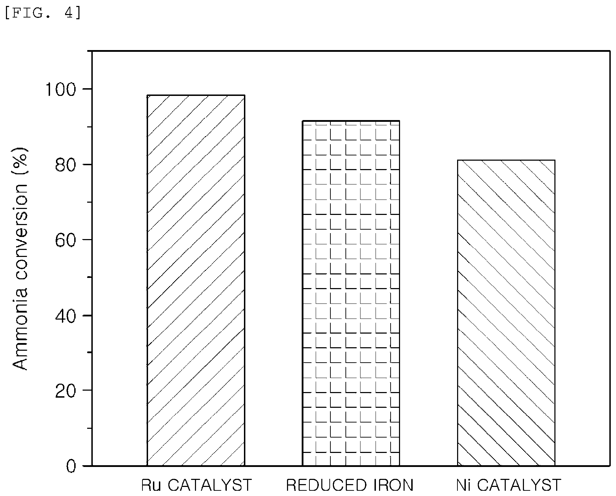

FIG. 4 is a graph comparing and evaluating ammonia decomposition performance for each catalyst.

Referring to FIG. 4, an ammonia decomposition performance was excellent in the order of a rubidium (Ru) catalyst, reduced iron, and a nickel (Ni) catalyst. Rubidium may be a noble metal, and may have a disadvantage in that a cost thereof is high due to low reserves. The reduced iron may have relatively abundant reserves and a higher energy transfer coefficient for decomposing ammonia, as compared to nickel, and thus, the ammonia decomposition performance may be superior to that of the nickel catalyst. As described above, the reduced iron may be used as an ammonia decomposition catalyst, to lower hydrogen production costs and secure relatively high ammonia resolution.

Reduced iron supplied to a fluidized bed reactor 100 may be discharged toward a lower portion of the fluidized bed reactor 100 to form a catalyst fluidized bed. The reduced iron may be used as a catalyst for an ammonia decomposition reaction. Since such reduced iron may form the catalyst fluidized bed, and may continuously flow into and out of the fluidized bed reactor 100, the catalyst for the ammonia decomposition reaction may be periodically exchanged. For this reason, unlike a conventional fixed reactor filled with a catalyst, it is not necessary to stop an operation of the reactor for replacing the catalyst, and hydrogen may be continuously produced. Consequently, hydrogen production efficiency may be improved. As an example, discharged reduced iron may be provided in an iron making process, and may be used as a raw material for a steel sheet.

The fluidized bed reactor 100 may be configured to generate hydrogen from ammonia by contacting the ammonia and the catalyst fluidized bed. To this end, ammonia may be supplied from a relatively lower portion thereof, as compared to the catalyst fluidized bed, and the ammonia may flow toward an upper portion of the fluidized bed reactor 100. For this reason, hydrogen decomposed from ammonia may be distributed in the upper portion of the fluidized bed reactor 100.

The fluidized bed reactor 100 is not particularly limited as long as the catalyst may be periodically exchanged without stopping the operation of the reactor by forming a fluidized bed inside the reactor. As a non-limiting example, the fluidized bed reactor 100 may include an ammonia-supplying unit located in a bottom portion, a reduced iron-discharging unit located on a higher level than the ammonia-supplying unit, a reduced iron-supplying unit located on a higher level than the ammonia-supplying unit, and a hydrogen gas discharge unit located in an upper end portion. The reduced iron supplied to the reduced iron-supplying unit may form the catalyst fluidized bed in the fluidized bed reactor 100, and may be discharged from the reduced iron-discharging unit.

According to example embodiments, a supply temperature of the reduced iron may be 600°C or higher. The supply temperature of the reduced iron may be 700°C or higher. The supply temperature of the reduced iron may be 750°C or higher. The supply temperature of the reduced iron may be 800°C or higher. The supply temperature of the reduced iron may be 850°C or higher. For this reason, thermal energy required for the ammonia decomposition reaction may be supplied from the reduced iron. In addition, since the reduced iron may be continuously supplied and discharged in the fluidized bed reactor 100, the thermal energy of the reduced iron may be used as energy for maintaining an ammonia reaction temperature. Consequently, it is possible to improve an energy efficiency of an ammonia decomposition process.

According to example embodiments, a discharge temperature of the reduced iron may be 500°C or higher. More specifically, the discharge temperature of the reduced iron may be different from the supply temperature of the reduced iron. The discharge temperature of the reduced iron may be substantially the same as an internal average temperature of the fluidized bed reactor 100.

According to example embodiments, ammonia may be preheated and supplied to a temperature of 500°C or higher. More specifically, ammonia may be preheated and supplied to a temperature of 500 to 700°C. In this manner, the ammonia may be preheated to minimize a temperature deviation in the fluidized bed reactor 100 and improve efficiency of the ammonia decomposition reaction.

As a non-limiting example, an average temperature in the fluidized bed reactor 100 may be 300°C or higher. The average temperature in the fluidized bed reactor 100 may be 400 to 900°C. When the average temperature in the fluidized bed reactor 100 is less than 300°C, a decomposition reaction efficiency of ammonia may be lowered. In addition, since a temperature difference between a portion in which high-temperature reduced iron of the fluidized bed reactor 100 flows and a different portion, other than the portion, through which the high-temperature reduced iron flows may increase, thermal stability of the fluidized bed reactor 100 may decrease.

Ammonia may be introduced into the fluidized bed reactor 100 at a space velocity of 2,500 to 10,000 h⁻¹ for a decomposition reaction of the ammonia. When the space velocity is less than 2,500 h⁻¹, there may be a problem that the reduced iron needs to be added directly and excessively. When the space velocity exceeds 10,000 h⁻¹, there may be a problem that the ammonia decomposition reaction efficiency excessively decreases.

Hydrogen generated in the fluidized bed reactor 100 may be collected from the upper portion of the fluidized bed reactor 100 and provided as a reducing agent. An average temperature of hydrogen flowing to the upper portion of the fluidized bed reactor may be 600°C or higher. More specifically, a mixed gas of nitrogen and hydrogen may be generated by the ammonia decomposition reaction in the fluidized bed reactor 100. This mixed gas may move to the upper portion of the fluidized bed reactor 100. Accordingly, the hydrogen may also flow to the upper portion of the fluidized bed reactor 100. The hydrogen flowing to the upper portion may be recovered in an appropriate manner, and may be discharged to an outside of the fluidized bed reactor 100. As a non-limiting example, hydrogen may be recovered from the mixed gas using any one method from membrane separation, pressure circulation adsorption (PSA), vacuum circulation adsorption (VSA), thermal circulation adsorption (TSA), and a combination thereof. For this reason, the hydrogen may be produced without the generation of carbon dioxide, and the process may be simple and economical, because separate energy may not be added in separating the hydrogen from the ammonia.

As an example, the recovered hydrogen may be provided to a steel mill, and may be used as a reducing agent for powdered iron ore. In addition, the recovered hydrogen may be appropriately used by ordinary technicians in the technical field to control reducing power of a reducing atmosphere gas in various industrial fields.

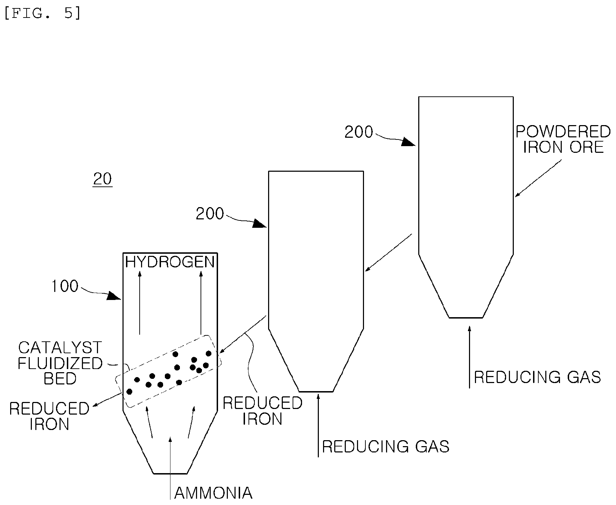

FIG. 5 is a view illustrating an ammonia decomposition system 20 according to other example embodiments.

Referring to FIG. 5, an ammonia decomposition system 20 may further include a flow reduction furnace 200 connected to a fluidized bed reactor 100.

As a non-limiting example, the flow reduction furnace 200 may be a flow reduction furnace used to implement a so-called FINEX method. That is, the flow reduction furnace 200 may be configured to reduce powdered iron ore containing a large amount of iron oxide for reduction of the powdered iron ore.

The flow reduction furnace 200 may be configured to provide reduced iron to the fluidized bed reactor 100. More specifically, the flow reduction furnace 200 may be configured to generate reduced iron by inputting and transferring powdered iron ore, and reducing the powdered iron ore with a reducing gas supplying in countercurrent flow with regard to a transfer direction of the powdered iron ore. The flow reduction furnace 200 may include two or more flow reduction furnaces in which a plurality of flow reduction furnaces are connected in succession.

By reduction by the flow reduction furnace 200 having a multi-stepped shape, 60% or more of iron components in the powdered iron ore first introduced in a form of iron oxide may be reduced to metal iron, to prepare so-called direct reduced iron (DRI). The direct reduced iron may contain 93% or more of the iron components, and in this case, 60% or more of the iron components may be reduced. The remainder may contain a trace amount of carbon (C), phosphorus (P), or sulfur (S). Such direct reduced iron may be provided to the fluidized bed reactor 100 as the reduced iron, which may be a catalyst for an ammonia reaction.

As a non-limiting example, the flow reduction furnace 200 may be operated under conditions of a pressure of 2 to 8 barg and a temperature of 650 to 900°C. For this reason, the reduced iron provided from the flow reduction furnace 200 may include thermal energy required for an ammonia decomposition reaction. Since such high-temperature reduced iron may be supplied by itself, an ammonia decomposition efficiency of the ammonia decomposition system 20 may be further improved.

According to example embodiments, in the ammonia decomposition systems 10 and 20, a ratio (D/Q) of a supply flow rate (Q, Nm³) of ammonia to the fluidized bed reactor and a supply amount (D, kg) of the reduced iron may be in a range of 40 to 300 kg/Nm³. More specifically, a ratio (D/Q) of a supply flow rate (Q) of ammonia to the fluidized bed reactor and a supply amount (D) of the reduced iron may be controlled to be in a range of 70 to 200 kg/Nm³.

When a D/Q value is less than 40 kg/Nm³, ammonia decomposition performance may be deteriorated. Also, the ammonia may be excessively supplied, as compared to the supplied reduced iron, and iron nitride may thus be excessively formed on a surface of the reduced iron. As the D/Q value increases, it is more preferable, but when the value is greater than 300 kg/Nm³, the reduced iron may be excessively supplied, and a temperature of the reduced iron discharged from the fluidized bed reactor may be maintained at an excessively high temperature. Accordingly, an overall energy efficiency of the ammonia decomposition systems 10 and 20 may be deteriorated.

As a non-limiting example, a supply flow rate of ammonia to the fluidized bed reactor may be adjusted by using a conventional means of adjusting a supply flow rate of fluid. As an example, the supply flow rate of ammonia to the fluid bed reactor may be adjusted using an opening/closing valve configured to control the supply flow rate of fluid depending on a degree of opening/closing, or a damper, and a volume flow meter configured to measure a volume flow rate of ammonia.

As a non-limiting example, a supply amount of reduced iron to the fluidized bed reactor may be adjusted using a conventional solid supply control means. As an example, the supply amount of reduced iron to the fluidized bed reactor may be adjusted using an opening/closing valve configured to control a supply amount of solids depending on a degree of opening/closing, and a mass flow meter configured to measure a supply amount of reduced iron.

As a non-limiting example, the ammonia decomposition system 10 and 20 may adjust a ratio (D/Q) of a supply flow rate (Q, Nm³) of ammonia to the fluidized bed reactor and a supply amount (D, kg) of the reduced iron by controlling a supply flow rate of the ammonia and a supply amount of the reduced iron using measurement results of the volume flow meter and the mass flow meter, described above.

### Mode for the Invention

### (Example)

Hereinafter, embodiments of the present disclosure will be described in detail such that those skilled in the art may easily implement the present disclosure. However, the present disclosure may be implemented in a number of different forms, and is not limited to the embodiments described herein.

### (Inventive Example 1)

Ammonia was supplied so as to flow upward from a bottom portion of a fluidized bed reactor. Reducing iron was supplied and discharged to the fluidized bed reactor such that a catalyst fluidized bed was formed on a higher level than the bottom portion of the fluidized bed reactor. In this case, a ratio (D/Q) of a supply flow rate (Q) of the ammonia to the fluidized bed reactor and a supply amount (D) of the reduced iron was controlled to be within a range of 40 to 60 kg/Nm³.

### (Inventive Example 2)

An ammonia decomposition reaction was performed in the same manner as in Inventive Example 1, except that a ratio (D/Q) of a supply flow rate (Q) of the ammonia to the fluidized bed reactor and a supply amount (D) of the reduced iron was controlled to be within a range of 70 to 90 kg/Nm³.

### (Inventive Example 3)

An ammonia decomposition reaction was performed in the same manner as in Inventive Example 1, except that a ratio (D/Q) of a supply flow rate (Q) of the ammonia to the fluidized bed reactor and a supply amount (D) of the reduced iron was controlled to be within the range of 120 to 180 kg/Nm³.

### (Comparative Example 1)

An ammonia decomposition reaction was performed in the same manner as in Inventive Example 1, except that a ratio (D/Q) of a supply flow rate (Q) of the ammonia to the fluidized bed reactor and a supply amount (D) of the reduced iron was controlled to be within the range of 10 to 30 kg/Nm³.

Thereafter, an ammonia decomposition rate, and an amount of iron nitride contained in discharged reduced iron were measured and are illustrated in Table 1 below.

The ammonia decomposition rate was evaluated by analyzing amounts of ammonia, nitrogen, and hydrogen on a rear end of the fluidized bed reactor with a mass spectrometer.

The amount of iron nitride may be analyzed in XRD and ICP AES by recovering reduced iron after ammonia decomposition.

**[Table 1]**

| Example | Ammonia Decomposition Rate (%) | Amount of Iron Nitride (wt%) |
|---|---|---|
| Inventive Example 1 | 90~98 | 1~2 |
| Inventive Example 2 | 95~98 | 0.5~1 |
| Inventive Example 3 | 95~98 | 0~0.5 |
| Comparative Example 1 | 65~75 | 3~5 |

Referring to Table 1, in Comparative Example 1, the ammonia decomposition rate was deteriorated because a ratio (D/Q) of a supply flow rate (Q) of the ammonia to the fluidized bed reactor and a supply amount (D) of the reduced iron was out of the range suggested by the present disclosure, and thus the ammonia decomposition rate was deteriorated and the amount of iron nitride was high. In contrast, in Inventive Examples 1 to 3, a ratio (D/Q) of a supply flow rate (Q) of the ammonia to the fluidized bed reactor and a supply amount (D) of the reduced iron satisfied the range suggested by the present disclosure, and thus the ammonia decomposition rate was very high and formation of iron nitride could be minimized.

As described above, the present disclosure has been described in more detail through drawings and embodiments. However, since the configurations described in the drawings or embodiments described in the present specification may be only examples of the present disclosure and do not represent all of the technical ideas of the present disclosure, it should be understood that there may be various equivalents and modifications that may replace them at the application time of the present disclosure.

### [Description of Reference Characters]

10, 20: Ammonia Decomposition System
100: Fluidized Bed Reactor
200: Flow Reduction Furnace

## Claims

1. An ammonia decomposition system comprising:
a fluidized bed reactor configured to receive ammonia and reduced iron, discharge the reduced iron through a lower portion of the fluidized bed reactor, form a catalyst fluidized bed, and contact the ammonia with the catalyst fluidized bed to generate hydrogen from the ammonia,
wherein a ratio (D/Q) of a supply flow rate (Q) of the ammonia to the fluidized bed reactor and a supply amount (D) of the reduced iron is in a range of 40 to 300 kg/Nm³.

2. The ammonia decomposition system of claim 1, wherein the ratio (D/Q) of a supply flow rate (Q) of the ammonia to the fluidized bed reactor and a supply amount (D) of the reduced iron is controlled to be in a range of 70 to 200 kg/Nm³.

3. The ammonia decomposition system of claim 1, wherein the ammonia decomposition system further includes a flow reduction furnace configured to be connected to the fluidized bed reactor to provide the reduced iron to the fluidized bed reactor, and
wherein the flow reduction furnace is configured to generate reduced iron by inputting and transferring powdered iron ore, and reducing the powdered iron ore with a reducing gas supplying in countercurrent flow with regard to a transfer direction of the powdered iron ore.

4. The ammonia decomposition system of claim 1, wherein a supply temperature of the reduced iron is 600°C or higher.

5. The ammonia decomposition system of claim 1, wherein a discharge temperature of the reduced iron is 500°C or higher.

6. The ammonia decomposition system of claim 1, wherein an average temperature of the hydrogen flowing in an upper portion of the fluidized bed reactor is 600°C or higher.

7. The ammonia decomposition system of claim 1, wherein an amount of iron nitride (FeₓN_{y}) contained in the discharged reduced iron is less than 3% (including 0%) by weight.

8. The ammonia decomposition system of claim 7, wherein an amount of iron nitride (FeₓN_{y}) contained in the discharged reduced iron is 1% or less (including 0%) by weight.

9. The ammonia decomposition system of claim 1, wherein the ammonia is preheated to and supplied in a temperature of 500°C or higher.

10. The ammonia decomposition system of claim 1, wherein the ammonia is provided at a space velocity of 2,500 h⁻¹ to 10,000 h⁻¹.
